# FASCICULE DE BREVET EUROPEEN

(11) **EP 3 117 641 B1**
(45) Date de publication et mention de la délivrance du brevet: **10.04.2019**
(21) Numéro de dépôt: 15707634.0
(22) Date de dépôt: 03.03.2015
(51) Int. Cl.: H04W 12/04, H04W 12/08, H04L 29/06, G06Q 20/32, G06Q 20/40, G06Q 20/04, G06Q 20/10, G07B 15/02, G07C 9/00

(54) **PROCÉDÉ DE CONTRÔLE D'ACCÈS À UNE ZONE RÉSERVÉE AVEC CONTRÔLE DE LA VALIDITÉ D'UN TITRE D'ACCÈS STOCKÉ DANS LA MÉMOIRE D'UN TERMINAL MOBILE**
VERFAHREN ZUR STEUERUNG DES ZUGANGS ZU EINER SCHUTZZONE MIT KONTROLLE DER GÜLTIGKEIT EINER IM SPEICHER EINES MOBILEN ENDGERÄTS INSTALLIERTEN ZUGANGSBERECHTIGUNG
METHOD OF CONTROLLING ACCESS TO A RESERVE ZONE WITH CONTROL OF THE VALIDITY OF AN ACCESS ENTITLEMENT INSTALLED IN THE MEMORY OF A MOBILE TERMINAL

(30) Priorité: 12.03.2014 FR 1400597
(43) Date de publication de la demande: 18.01.2017
(73) Titulaire: Revenue Collection Systems France SAS, 91220 Plessis-Pâté (FR)
(72) Inventeur: DAILLY, Philippe, F-91229 Bretigny- sur-Orge Cedex (FR)
(74) Mandataire: Lavoix
(86) Numéro de dépôt international: PCT/EP2015/054376
(87) Numéro de publication internationale: WO 2015/135793

(56) Documents cités:
- EP-A1- 2 306 692
- EP-A2- 1 276 081
- WO-A2-2008/062179
- GB-A- 2 485 442
- US-A1- 2002 043 566
- US-A1- 2006 036 863
- US-A1- 2011 208 645

## Description

La présente invention concerne un procédé de contrôle d'accès à une zone réservée par un système de contrôle d'accès à la zone réservée, le procédé étant du type comprenant les étapes suivantes :
- présentation d'un terminal mobile à un point de contrôle d'accès du système de contrôle d'accès,
- capture d'une image portée par le point de contrôle d'accès, représentative d'une donnée informatique encodée, au moyen d'une caméra du terminal mobile, et
- déchiffrement, par le terminal mobile, de l'image capturée par la caméra, pour en déduire la donnée informatique encodée.

Les opérateurs de réseaux de transport public, pour s'assurer que les utilisateurs de leur réseau sont bien des utilisateurs autorisés acquittant une redevance d'utilisation du réseau, équipent généralement leur réseau d'un système de contrôle d'accès au réseau de transport public. Ce système de contrôle d'accès comprend le plus souvent des points de contrôle d'accès disposés à l'entrée du réseau de transport public, c'est-à-dire à l'entrée des véhicules du réseau (autobus, tramways et métros) ou à l'entrée des quais de chargement dans lesdits véhicules. Ces points de contrôle d'accès sont adaptés pour vérifier que le titre de transport de l'utilisateur, constituant un titre d'accès de l'utilisateur au réseau de transport en commun, et qui est chargé sur un support, est valide.

Des cartes rechargeables, le plus souvent sans contact, sont généralement utilisées comme supports pour ces titres de transport, comme décrit par exemple dans US 2006/0036863. S'agissant de supports destinés à des utilisateurs occasionnels, cette solution présente cependant l'inconvénient de représenter un coût non négligeable pour l'opérateur, puisque celui-ci doit fournir à l'utilisateur lesdites cartes rechargeables.

Pour contourner ce problème, les opérateurs de réseau de transport public ont essayé d'utiliser comme support de titre de transport un support qui soit déjà en possession de l'utilisateur. Ils se sont ainsi orientés vers les ordiphones, qui présentent l'avantage d'équiper déjà un nombre important d'utilisateurs et de posséder des fonctions de sécurité et de communication sans contact qui en font des terminaux aptes à remplir toutes les fonctions des supports classiques.

Les solutions aujourd'hui développées pour utiliser les ordiphones comme supports de titres de transport utilisent le plus souvent la communication en champ proche (mieux connue sous l'acronyme NFC, de l'anglais « Near Field Communication »). Ces solutions sont gérées par les opérateurs de téléphonie mobile, qui fournissent les terminaux, l'infrastructure et le système de facturation à l'opérateur de transport public. Elles sont désavantageuses à plus d'un titre. Tout d'abord, elles ne permettent qu'à très peu d'utilisateurs de l'utiliser, car peu d'ordiphones sont équipés de puces NFC. En outre, elles rendent l'opérateur de transport public dépendant des opérateurs de téléphonie mobile, des fabricants de cartes SIM, et des fabricants de téléphones mobiles. Quant aux autres solutions n'utilisant pas la communication en champ proche, elles nécessitent généralement une communication permanente entre l'ordiphone et un serveur central du système de contrôle d'accès, communication qui est malaisée lorsque l'utilisateur évolue dans un espace où la propagation des ondes électromagnétiques est mauvaise, comme une station de métro.

On connaît par ailleurs de WO 2008/062179 un procédé de contrôle de la validité d'un titre de transport, stocké dans la mémoire d'un assistant personnel numérique, par un valideur. Ce procédé comprend une étape de capture d'un datagramme au moyen d'une caméra de l'assistant personnel, une étape d'extraction de données à partir de ce datagramme, et une étape de chiffrement d'une transmission Bluetooth entre le valideur et l'assistant personnel au moyen des données extraites.

Un autre procédé de jumelage Bluetooth de deux dispositifs au moyen de la capture d'un datagramme par l'un de ces dispositifs est également connu de EP 2 306 692.

On connaît également des systèmes dans lesquels les titres de transport des utilisateurs du réseau, au lieu d'être chargés sur des supports portés par ces utilisateurs, sont stockés dans un serveur central. Pour pouvoir circuler sur le réseau de transport, chaque utilisateur doit alors s'identifier auprès des points de contrôle d'accès au réseau au moyen d'un identifiant unique associé à son titre de transport. Un tel système est connu par exemple de GB 2 485 442.

Un objectif de l'invention est de permettre aux opérateurs de transport public de s'affranchir de la nécessité de fournir un support spécifique pour titre de transport à chacun des utilisateurs de leur réseau. D'autres objectifs sont d'éviter de rendre les opérateurs de transport public dépendants de tout autre prestataire de service, et de leur permettre de s'affranchir de la nécessité de fournir un support spécifique pour titre de transport pour un grand nombre d'utilisateurs de leur réseau. L'invention est définie dans la revendication 1.

A cet effet, l'invention a pour objet un procédé du type précité, dans lequel la donnée informatique encodée est un identifiant unique du point de contrôle d'accès, le procédé comportant en outre les étapes suivantes :
- établissement d'une connexion sans fil entre le terminal mobile et le point de contrôle d'accès, par le terminal mobile, au moyen de l'identifiant unique du point de contrôle d'accès déchiffrée,
- transmission au point de contrôle d'accès, par le terminal mobile, d'un titre d'accès à la zone réservée stocké dans sa mémoire, via la connexion sans fil, et
- contrôle de la validité des données dudit titre d'accès par le point de contrôle d'accès.

Selon des modes de réalisation particuliers de l'invention, le procédé présente également l'une ou plusieurs des caractéristiques suivantes, prise(s) isolément ou suivant toute(s) combinaison(s) techniquement possible(s).
- Le procédé comprend une étape supplémentaire de mise à jour du titre d'accès par le point de contrôle d'accès, dans la mémoire du terminal mobile, via la connexion sans fil.
- L'étape de mise à jour comprend une sous-étape d'incrémentation d'un premier compteur compris dans le titre d'accès, le procédé comprenant en outre une étape d'enregistrement d'une copie dudit compteur dans un serveur central du système de contrôle d'accès.
- L'étape de contrôle de la validité des données du titre d'accès par le point de contrôle d'accès comprend une sous-étape de contrôle de la conformité de la valeur du compteur avant incrémentation à celle de la copie du compteur enregistrée sur le serveur central, les données du titre d'accès n'étant déclarées valides que dans le cas où une telle conformité est vérifiée.
- Le titre d'accès comprend une horodate limite de validité, et l'étape de contrôle de la validité des données dudit titre d'accès par le point de contrôle d'accès comprend les sous-étapes suivantes : lecture de l'horodate limite de validité du titre d'accès, et comparaison de ladite horodate limite avec la date-heure de l'instant de présentation du terminal mobile au point de contrôle d'accès.
- Le procédé comprend une étape de connexion du terminal mobile au serveur central via Internet, une étape de contrôle de la validité des données du titre d'accès par le serveur central et, dans le cas où le serveur central conclut à la validité desdites données du titre d'accès, une étape de remplacement de l'horodate limite de validité du titre d'accès par une date-heure limite ultérieure.
- L'étape de contrôle de la validité des données du titre d'accès par le serveur central comprend une sous-étape de contrôle de la conformité de la valeur du compteur à celle de la copie du compteur enregistrée sur le serveur central, le titre d'accès n'étant déclaré valide que dans le cas où une telle conformité est vérifiée.
- L'étape de contrôle de la validité des données du titre d'accès par le serveur central comprend une sous-étape de vérification de l'intégrité des données du titre d'accès, le titre d'accès n'étant déclaré valide que dans le cas où l'intégrité dudit titre d'accès est vérifiée.
- L'étape de contrôle de la validité des données du titre d'accès par le serveur central comprend une sous-étape de comparaison entre un premier identifiant unique compris dans le titre d'accès et un deuxième identifiant spécifique au terminal mobile, par exemple une adresse MAC du terminal mobile, le titre d'accès n'étant déclaré valide qu'en cas d'adéquation entre les premier et deuxième identifiants.
- Dans le cas où l'horodate limite est antérieure à la date-heure de l'instant de présentation du terminal mobile au point de contrôle d'accès, le titre d'accès est déclaré invalide.
- Dans le cas où l'horodate limite est antérieure à la date-heure de l'instant de présentation du terminal mobile au point de contrôle d'accès, le point de contrôle d'accès se connecte au serveur central pour contrôler la conformité de la valeur du compteur avant incrémentation à celle de la copie du compteur enregistrée sur le serveur central, le titre d'accès n'étant déclaré valide que dans le cas où une telle conformité est vérifiée.
- L'étape de mise à jour comprend une sous-étape d'horodatage du titre d'accès.
- L'étape de contrôle de la validité des données du titre d'accès par le point de contrôle d'accès comprend une sous-étape de vérification de l'intégrité des données du titre d'accès, le titre d'accès n'étant déclaré valide que dans le cas où l'intégrité dudit titre d'accès est vérifiée.
- L'étape de contrôle de la validité des données du titre d'accès par le point de contrôle d'accès comprend une sous-étape de comparaison entre un premier identifiant unique compris dans le titre d'accès et un deuxième identifiant spécifique au terminal mobile, par exemple une adresse MAC du terminal mobile, le titre d'accès n'étant déclaré valide qu'en cas d'adéquation entre les premier et deuxième identifiants.
- Le titre d'accès comprend une signature numérique pour la vérification de son authenticité, ladite signature étant fonction d'un identifiant spécifique au terminal mobile, par exemple une adresse MAC du terminal mobile.
- L'identifiant unique est l'adresse MAC du point de contrôle d'accès.
- L'image portée par le point de contrôle d'accès est un code-barres, en particulier un code-barres bidimensionnel.
- Le réseau sans-fil est un réseau Bluetooth.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique d'un système de contrôle d'accès à une zone réservée et d'un terminal mobile pour la mise en oeuvre d'un procédé selon l'invention,
- la Figure 2 est une illustration d'un titre de transport stocké dans une mémoire du terminal mobile de la Figure 1,
- la Figure 3 est un diagramme synoptique d'un procédé de contrôle d'accès selon l'invention,
- la Figure 4 est un diagramme synoptique détaillant les sous-étapes d'une première étape de contrôle de la validité des données d'un titre d'accès du procédé de la Figure 3,
- la Figure 5 est un diagramme synoptique détaillant les sous-étapes d'une sous-étape de contrôle de la validité des données du titre d'accès par un point de contrôle d'accès de l'étape de la Figure 4, et
- la Figure 6 est un diagramme synoptique détaillant les sous-étapes d'une deuxième étape de contrôle de la validité des données du titre d'accès du procédé de la Figure 3.

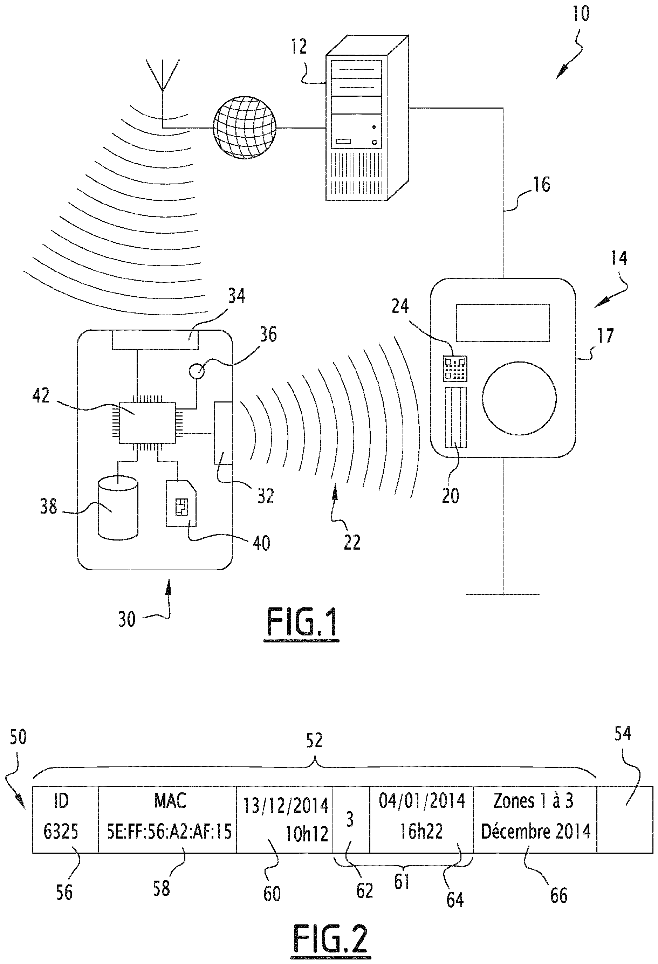

Le système de contrôle d'accès 10 de la Figure 1 est destiné à contrôler l'accès d'utilisateurs à une zone réservée, en particulier à un réseau de transport public. A cet effet, le système de contrôle d'accès 10 comprend, de façon connue, un serveur central 12 et une pluralité de points de contrôle d'accès 14. Le système de contrôle d'accès 10 comprend en outre des moyens 16 de communication de chaque point de contrôle d'accès 14 avec le serveur central 12.

Le serveur 12 est raccordé à Internet et est adapté pour communiquer avec des terminaux mobiles via Internet pour vendre des titres de transport destinés à être chargés sur lesdits terminaux mobiles et contrôler la validité des titres de transports chargés sur lesdits terminaux mobiles. A cet effet, le serveur 12 comprend notamment une mémoire (non représentée) stockant un identifiant pour chaque titre de transport vendu.

Chaque point de contrôle d'accès 14 est disposé à une entrée de la zone réservée, c'est-à-dire à une entrée de l'un des véhicules du réseau de transport et/ou à une entrée d'un quai d'accès à l'un desdits véhicules. Chaque point de contrôle d'accès 14 comprend un valideur 17 et, de préférence, un portique ou un portillon de contrôle d'accès au réseau de transport (non représenté), associé au valideur, pour bloquer l'accès au réseau de transport lorsque le titre de transport qui est présenté au valideur 17 n'est pas valide.

Chaque valideur 17 comprend des moyens 20 de communication sans fil, par exemple une puce Bluetooth couplée à une antenne, pour l'échange de données entre le valideur 17 et d'autres terminaux via une connexion sans fil 22, typiquement une connexion Bluetooth. Selon l'invention, chaque point de contrôle d'accès 14 porte une image 24 représentative d'une donnée informatique encodée, ladite donnée informatique encodée étant un identifiant unique, en particulier un identifiant réseau unique, par exemple une adresse MAC (de l'anglais « Media Access Control »), des moyens de communication sans fil 20 du valideur 17 dudit point de contrôle d'accès 14.

De façon connue, une adresse MAC d'un équipement est un identifiant physique stocké dans une carte réseau ou une interface réseau de l'équipement et utilisé pour attribuer une adresse unique audit équipement lorsque celui-ci se connecte à un réseau via ladite carte réseau ou interface réseau.

Dans l'exemple représenté, les moyens de communication 16 sont des moyens de communication filaires. En variante, les moyens de communication 16 sont des moyens de communication sans fil et sont de préférence compatibles avec au moins l'une des normes suivantes : GSM (de l'anglais « Global System for Mobile Communications), CDMA (de l'anglais « Code Division Multiple Access »), UMTS (de l'anglais « Universal Mobile Telecommunications System »), LTE (de l'anglais « Long Term Evolution ») ou Wi-Fi.

Le terminal mobile 30 de la Figure 1 comprend des premiers moyens de communication sans fil 32 compatibles avec les moyens de communication 20, c'est-à-dire, dans le cadre de l'exemple mentionné ci-dessus, une puce Bluetooth couplée à une antenne. Le terminal mobile 30 comprend en outre des deuxième moyens de communication sans fil 34, une caméra 36, une mémoire 38, une carte SIM (de l'anglais « Subscriber Identity Module ») 40 et un calculateur 42.

Les deuxièmes moyens de communication sans fil 34 supportent le protocole Internet et sont de préférence compatibles avec au moins l'une des normes suivantes : GSM, CDMA, UMTS, LTE ou Wi-Fi.

La deuxième mémoire 38 est de préférence une mémoire réinscriptible. Elle stocke une application d'émulation de titre de transport (non représentée) qui est programmée pour que, lorsqu'elle est exécutée par le calculateur 42, elle déchiffre une image de l'image 24 capturée par la caméra 36 de façon à en déduire l'identifiant du valideur 17, et active les premiers moyens de communication sans fil 32 de façon à établir une connexion sans fil entre le terminal mobile 30 et le valideur 17, via les moyens de communication 20, 32, au moyen de l'identifiant décodé. Ladite application est également programmée pour permettre l'achat de titres de transport au serveur 12, et pour enregistrer dans la mémoire 38 les titres de transport chargés sur le terminal 30 par le serveur 12. Enfin, l'application est programmée pour transmettre les titres de transport stockés dans la mémoire 38 au valideur 17 lorsqu'une connexion est établie entre le valideur 17 et le terminal 30, et pour enregistrer les titres de transport mis à jour transmis par le valideur 17 dans la mémoire 38, en remplacement des précédentes versions des titres de transport.

Un titre de transport 50 est illustré schématique sur la Figure 2.

Comme visible sur cette Figure, chaque titre de transport 50 comprend un groupe de données 52 et une signature numérique 54 du groupe de données 52.

Le groupe de données 52 comprend un identifiant 56 du titre de transport 50. Il comprend également un premier identifiant 58 fonction du terminal mobile 30 depuis lequel il a été acheté. Il comprend encore une horodate limite 60 de validité des données 52, des données 61 de suivi du titre de transport, comprenant un compteur 62 et une horodate de validation 64, et un contrat de transport 66.

L'identifiant 56 est typiquement un numéro de contrat associé au titre de transport 50. Il est similaire à l'identifiant stocké dans le serveur 12.

Le premier identifiant 58 est par exemple l'adresse MAC des premiers moyens de communication sans fil 32 du terminal mobile 30 avec lequel le titre de transport 50 a été acheté.

Le compteur 62 est adapté pour être incrémenté par chaque valideur 17 à chaque fois que le titre de transport 50 est lu par un valideur 17.

L'horodate de validation 64 est un groupe date-heure correspondant au dernier instant de lecture du titre de transport 50 par un valideur 17.

Le contrat de transport 66 est, de façon connue, représentatif d'une autorisation de circuler, sur au moins une partie du réseau de transport, délivrée au titulaire du titre de transport 50. Le contrat de transport 66 est par exemple un contrat donnant un accès illimité à une partie ou à l'intégralité du réseau de transport. En variante, le contrat de transport 66 est un contrat de transport du type « porte-monnaie électronique », représentant une donnée quantifiable et étant adapté pour être prélevé d'une certaine quantité de ladite donnée quantifiable à chaque voyage de l'utilisateur sur le réseau.

La signature 54 est obtenue par application d'une clé de chiffrement au groupe de données 52 ou à un condensé (hash) dudit groupe de données 52.

Le terminal mobile 30 est typiquement un ordiphone.

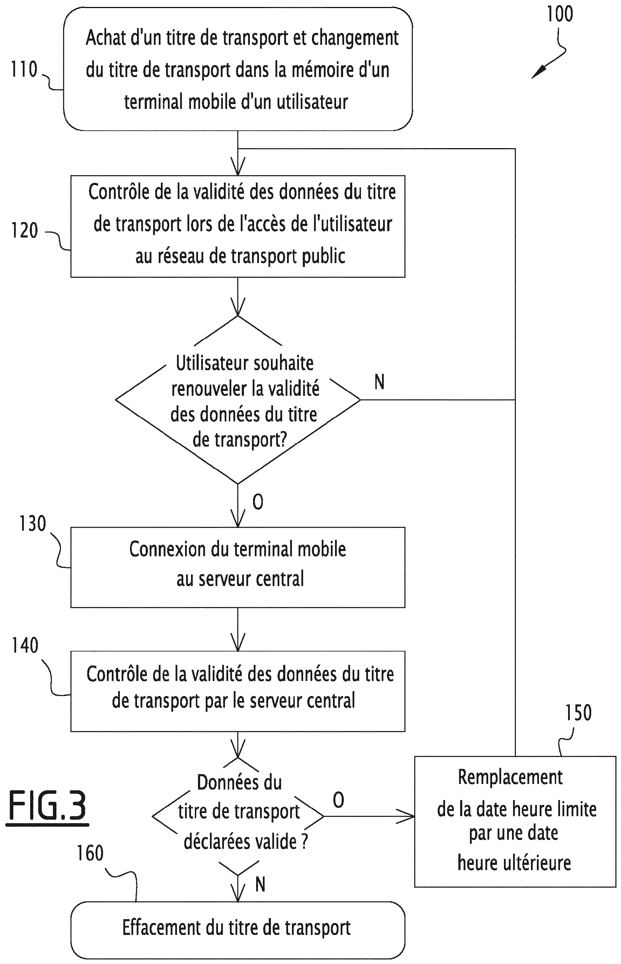

Le procédé de contrôle d'accès 100 selon l'invention, mis en oeuvre au moyen du système 10 et du terminal mobile 30, va maintenant être décrit, en référence aux Figures 3 à 6.

Comme visible sur la Figure 3, ce procédé 100 comprend une première étape 110 d'achat d'un titre de transport 50 et de chargement du titre de transport 50 dans la mémoire 38 du terminal mobile 30. Lors de cette première étape 110, l'utilisateur qui possède le terminal mobile 30 lance l'application d'émulation de titre de transport. Avec cette application, il achète un titre de transport 50 virtuel sur le serveur 12. Ce titre de transport 50 est ensuite téléchargé sur le terminal mobile 30, et enregistré dans la mémoire 38 par l'application d'émulation de titre de transport.

A l'étape d'achat et de chargement 110 fait suite une étape 120 de contrôle de la validité du titre de transport chargé lors de l'accès de l'utilisateur au réseau de transport public. Cette étape survient à chaque fois que l'utilisateur se présente à une limite du réseau de transport public, c'est-à-dire à une entrée ou à une sortie du réseau de transport public, en vue d'y accéder ou d'en sortir.

Le procédé 100 comprend en outre une étape 130 de connexion du terminal mobile 30 au serveur central 12 via Internet à intervalles de temps réguliers ou lorsque l'utilisateur souhaite renouveler la validité des données de son titre de transport 50. Cette connexion est établie au moyen des moyens de connexion 34.

L'étape 130 est suivie d'une étape 140 de contrôle de la validité des données du titre de transport 50 par le serveur central 12. Le procédé 100 comprend en outre une étape 150 de remplacement de l'horodate limite 60 par une date-heure ultérieure lorsque les données du titre 50 sont déclarées valides par le serveur central 12, et une étape 160 d'effacement du titre de transport 50 de la mémoire 38 du terminal mobile 30 lorsque les données du titre 50 sont déclarées invalides par le serveur central 12. En variante, l'étape d'effacement 160 est remplacée par une étape d'envoi d'une amende à l'utilisateur.

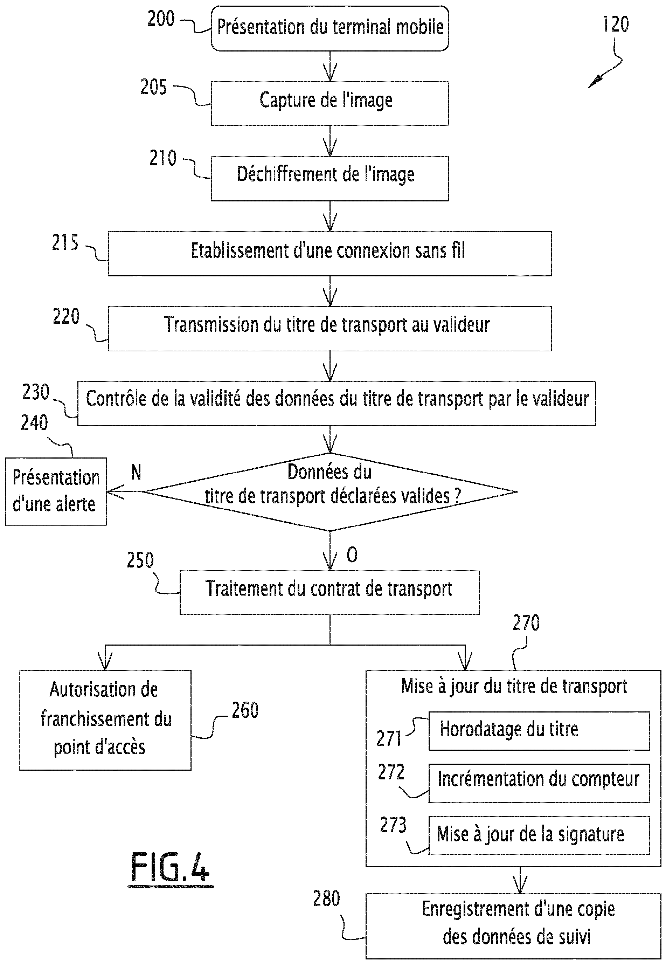

En référence à la Figure 4, l'étape 120 comprend une première étape 200 de présentation du terminal mobile 30 à un valideur 17, l'application d'émulation de carte étant active. Cette étape est suivie par une étape 205 de capture de l'image 24 par la caméra 36 du terminal mobile 30, puis par une étape 210 de déchiffrement de l'image 24 par l'application d'émulation de carte.

L'identifiant du valideur 17 est ainsi déduit par l'application d'émulation de carte qui, dans une étape 215, utilise cet identifiant pour établir une connexion sans fil directe 22 entre le terminal mobile 30 et le valideur 17, par l'intermédiaire des moyens de connexion sans fil 20 et 32.

L'étape 215 est suivie par une étape 220 de transmission du titre de transport 50 au valideur 17, au cours de laquelle l'application d'émulation de carte transmet le titre de transport 50 au valideur 17, par l'intermédiaire de la connexion sans fil 22.

Puis, lors d'une étape 230, le valideur 17 contrôle la validité des données du titre de transport 50.

L'étape 120 comprend encore une étape 240 de présentation d'une alerte lorsque les données du titre de transport 50 sont déclarées invalides, et une étape 250 de traitement du contrat de transport 66 lorsque les données 52 du titres de transport 50 sont déclarées valides.

Lors de l'étape 240, une alerte est présentée à l'utilisateur et/ou à un organisme de contrôle des accès au réseau de transport public. Cette alerte est de préférence une alerte visuelle et est par exemple affichée sur le valideur 17. En option, l'alerte visuelle est accompagnée d'une alerte sonore. En variante, l'alerte est constituée par une alerte sonore.

En option, un blocage de l'accès au réseau de transport public survient concomitamment à l'étape 240. Ce blocage est constitué par la non-ouverture ou la fermeture du portillon ou du portique d'accès associé au valideur 17.

L'étape de traitement 250 est connue et comprend la vérification, par le valideur 17, du fait que le contrat de transport 66 confère à son titulaire l'autorisation d'entrer ou de sortir du réseau par le point de contrôle d'accès 14. Dans le cas où le contrat de transport 66 est du type « porte-monnaie électronique », l'étape de traitement 250 peut également comprendre le prélèvement, sur le contrat 66, d'une quantité fonction du voyage effectué par l'utilisateur sur le réseau de transport.

L'étape de traitement 250 est suivie d'une étape 260 d'autorisation du franchissement du point de contrôle d'accès 14 par l'utilisateur et d'une étape 270 de mise à jour du titre de transport 50 dans la mémoire 38 du terminal mobile 30.

Lors de l'étape 260, le valideur 17 communique l'information que le franchissement du point de contrôle d'accès 14 par l'utilisateur est autorisé. Cette information est par exemple affichée sur un écran du valideur 17. De préférence, un passage d'entrée ou de sortie du réseau de transport est simultanément libéré par le déplacement du portillon ou du portique associé au valideur 17 en position ouverte.

Lors de l'étape 270, le titre de transport 50 est mis à jour par le valideur 17 dans la mémoire 38 du terminal mobile 30, via la connexion sans fil 22. Cette étape comprend une première sous-étape 271 d'horodatage du titre de transport 50, une deuxième sous-étape 272 d'incrémentation du compteur 62, et une troisième sous-étape 273 de mise à jour de la signature 54.

Lors de l'étape d'horodatage 271, le valideur 17 écrit en remplacement de l'horodate 64 l'heure et la date de la lecture du titre 50 par le valideur 17.

Lors de l'étape 272, le valideur 17 incrémente le compteur 62 du titre 50.

Lors de l'étape 273, la signature 54 est recalculée à partir des données 52 mises à jour.

L'étape 270 est suivie d'une étape 280 d'enregistrement d'une copie des données de suivi 61 dans une mémoire du serveur central 12. Cette étape 280 survient si les moyens de communication 16 sont disponibles. Si les moyens de communication 16 sont indisponibles au moment où le terminal mobile 30 est présenté au valideur 17, le valideur 17 diffère la transmission de la copie des données de suivi 61 au serveur 12 en attendant que les moyens de communication 16 soient disponibles.

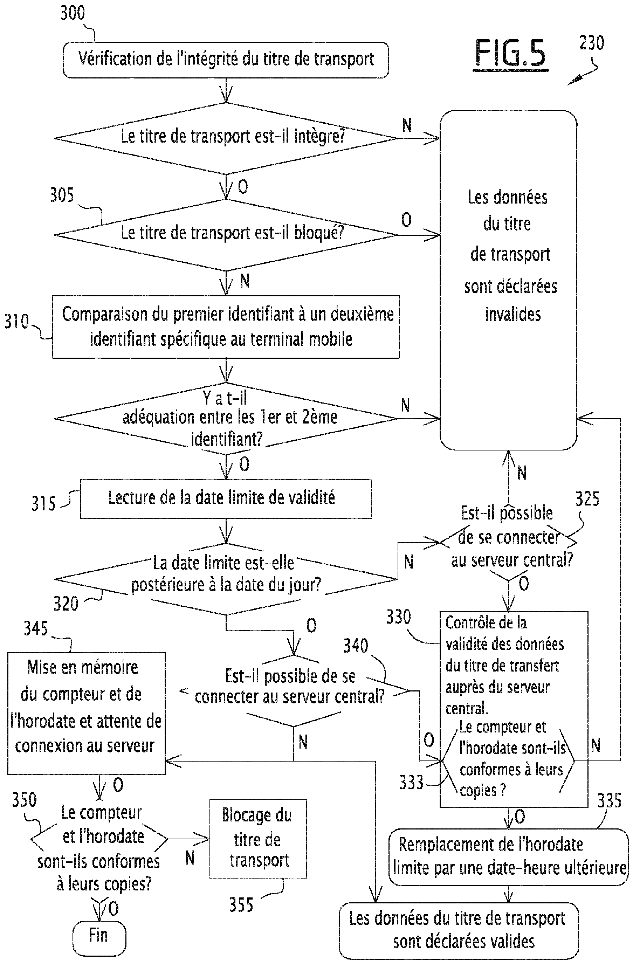

En référence à la Figure 5, l'étape 230 de contrôle de la validité des données du titre du titre de transport 50 par le valideur 17 comprend une première étape 300 de vérification de l'intégrité du titre de transport 50. Au cours de cette étape, le valideur 17 vérifie, par des moyens connus, que la signature 54 correspond bien aux données 52. Si cette correspondance est vérifiée, le valideur 17 déclare les données du titre de transport 50 intègres. Dans le cas contraire, le valideur 17 déclare les données du titre de transport 50 invalides.

Une étape 305 de contrôle du blocage du titre de transport 50 fait suite à l'étape 300 dans le cas où les données du titre de transport 50 sont déclarées intègres. Au cours de cette étape 305, le valideur 17 vérifie que l'identifiant 56 du titre de transport 50 ne figure pas dans une liste de titres de transport bloqués. Si l'identifiant 56 figure dans ladite liste, le valideur 17 déclare les données du titre de transport 50 invalides. Dans le cas contraire, le valideur 17 conclut que le titre de transport 50 n'est pas bloqué.

Une étape 310 de comparaison du premier identifiant 58 à un deuxième identifiant spécifique du terminal mobile 30 fait suite à l'étape 305 dans le cas où le valideur 17 conclut que le titre de transport 50 n'est pas bloqué. Lors de cette étape 310, le valideur 17 compare le premier identifiant 58 à un deuxième identifiant spécifique au terminal mobile 30, par exemple à un identifiant réseau unique, typiquement constitué par l'adresse MAC, des moyens de connexion 32. Dans le cas où ces identifiants sont différents l'un de l'autre, le valideur 17 déclare les données du titre de transport 50 invalides. Dans le cas où il y a adéquation entre les deux identifiants, le valideur 17 passe à une nouvelle étape 315.

L'étape 315 est une étape de lecture de l'horodate limite 60. Elle est suivie d'une étape 320 de comparaison de l'horodate limite 60 à la date-heure de présentation du terminal mobile 30 au valideur 17.

Dans le cas où l'horodate limite 60 est antérieure à la date-heure de présentation du terminal mobile 30 au valideur 17, le valideur 17 vérifie, lors d'une étape 325, s'il lui est possible de se connecter au serveur central 12. Si cette connexion est impossible, le valideur 17 déclare le titre de transport 50 invalide. Si cette connexion est possible, le valideur 17 interroge le serveur central 12, lors d'une étape 330, pour contrôler la validité des données du titre de transport 50 auprès du serveur central 12 ; cette sous-étape de contrôle 330 comprend une étape 333 de contrôle de la conformité de l'horodate 64 et du compteur 62 à des copies de l'horodate 64 et du compteur 62 mémorisées sur le serveur 12.

Dans le cas où l'horodate 64 et/ou le compteur 62 ne sont pas égaux à leurs copies respectives, le valideur 17 déclare les données du titre de transport 50 invalides. Dans le cas contraire, l'horodate limite 60 est remplacée, lors d'une étape 335, par une date-heure limite ultérieure, et les données du titre de transport 50 sont déclarées valides.

Dans le cas où l'horodate limite 60 est postérieure à l'instant de présentation du terminal mobile 30 au valideur 17, le valideur 17 vérifie de préférence, lors d'une étape 340, s'il lui est possible de se connecter au serveur central 12. Si cette connexion est possible, le valideur 17 procède avec l'étape 330 décrite plus haut. Si cette connexion est impossible, le valideur 17 déclare les données du titre de transport 50 valides et, lors d'une étape 345, met l'horodate 64 et le compteur 62 en mémoire et attend que les moyens de communication 16 soient disponibles.

Ensuite, lorsque les moyens de communication 16 sont disponibles, le valideur 17 fournit au serveur central 12 l'horodate 64 et le compteur 62 mémorisés. Lors d'une étape 350, le serveur 12 contrôle la conformité de l'horodate et du compteur 62 aux copies de l'horodate 64 et du compteur 62 qu'il a mémorisées. Dans le cas où l'horodate 64 et/ou le compteur 62 ne sont pas égaux à leurs copies respectives, le serveur 12 commande le blocage du titre de transport 50 lors d'une étape 355. A cet effet, le serveur 12 inscrit l'identifiant 56 du titre de transport 50 sur la liste des titres de transport bloqués, et communique la liste mise à jour à chaque valideur 17 du système 10.

En variante, l'étape de blocage 355 est remplacée par une étape d'envoi d'une amende à l'utilisateur.

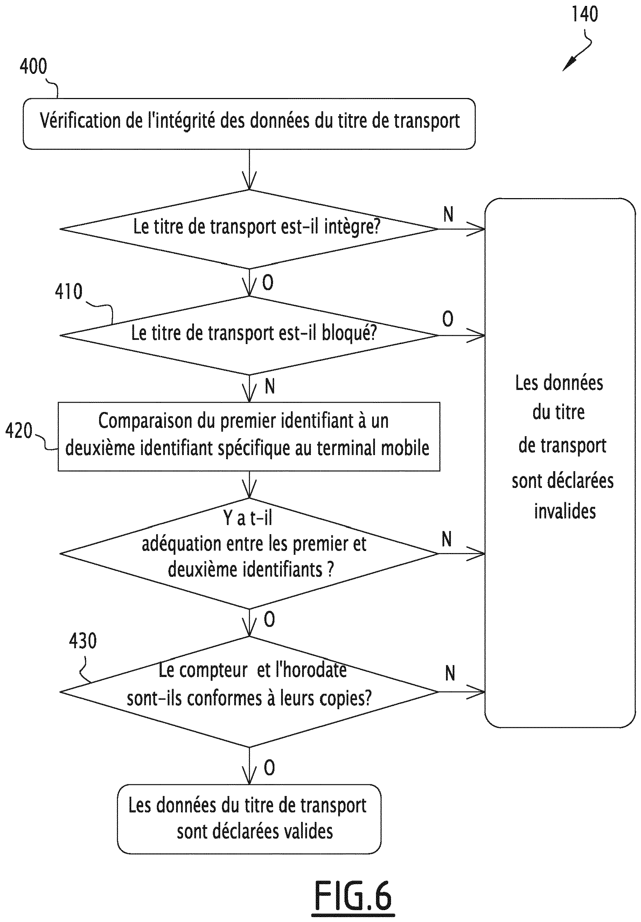

En référence à la Figure 6, l'étape 140 de contrôle de la validité des données du titre de transport 50 par le serveur central 12 comprend une première sous-étape 400 de vérification de l'intégrité des données du titre de transport 50. L'étape 140 comprend en outre une sous-étape 410 de contrôle du blocage du titre de transport 50, une étape 420 de comparaison du premier identifiant 58 à un deuxième identifiant spécifique au terminal mobile 30, et une sous-étape 430 de contrôle de la conformité de l'horodate 64 et du compteur 62 aux copies de l'horodate 64 et du compteur 62 mémorisés sur le serveur 12.

Au cours de l'étape 400, le serveur central 12 vérifie, par des moyens connus, que la signature 54 correspond bien aux données 52. Si cette correspondance est vérifiée, le serveur central 12 déclare le titre de transport 50 intègre et procède avec l'étape 410. Dans le cas contraire, le serveur central 12 déclare le titre de transport 50 invalide.

Lors de l'étape 410, le serveur central 12 vérifie que l'identifiant 56 du titre de transport 50 ne figure pas dans une liste de titres de transport bloqués. Si l'identifiant 56 figure dans ladite liste, le serveur central 12 déclare le titre de transport 50 invalide. Dans le cas contraire, le serveur central 12 conclut que le titre de transport 50 n'est pas bloqué et procède avec l'étape 420.

Lors de l'étape 420, le serveur central 12 compare le premier identifiant 58 à un deuxième identifiant spécifique au terminal mobile 30, par exemple à un identifiant réseau unique, typiquement constitué par l'adresse MAC, des moyens de connexion 32. Dans le cas où ces identifiants sont différents l'un de l'autre, le serveur central 12 déclare le titre de transport 50 invalide. Dans le cas où il y a adéquation entre les deux identifiants, le serveur central 12 procède avec l'étape 430.

Lors de l'étape 430, le serveur central compare l'horodate 64 et le compteur 62 aux horodate et compteur associés au titre de transport 50 mémorisés sur le serveur 12. Dans le cas où l'horodate 64 et/ou le compteur 62 ne sont pas égaux à leurs copies respectives mémorisées sur le serveur 12, le serveur central 12 déclare les données du titre de transport 50 invalides. Dans le cas contraire, le serveur central 12 déclare les données du titre de transport 50 valides.

Grâce à l'invention décrite ci-dessus, les opérateurs de transport public peuvent s'affranchir de la nécessité de fournir un support spécifique pour titre de transport à chacun des utilisateurs de leur réseau, le terminal mobile de certains de ces utilisateurs pouvant se substituer à un tel support spécifique.

En outre, dans la mesure où il suffit au terminal mobile de l'utilisateur d'avoir une caméra et des moyens de communication sans fil, un grand nombre de terminaux mobiles existants sont susceptibles de pouvoir être utilisés pour mettre en oeuvre l'invention. Les opérateurs pourront donc s'affranchir de la nécessité de fournir un support spécifique pour titre de transport pour un grand nombre d'utilisateurs de leur réseau.

De plus, seule une communication occasionnelle du terminal mobile 30 avec le serveur central 12 étant nécessaire, le procédé 100 est particulièrement adapté à une utilisation dans des espaces où la propagation des ondes électromagnétiques est mauvaise, comme les stations de métro.

Par ailleurs, le procédé 100 offre une bonne protection contre les tentatives de fraude. Il est en effet difficile pour un fraudeur de dupliquer le titre de transport 50 pour l'utiliser sur un autre terminal mobile 30, dans la mesure où l'identifiant 58 ne correspondrait alors plus à l'identifiant spécifique du terminal mobile 30 sur lequel le titre de transport 50 serait chargé. Les fraudes par rejeu sont également empêchées, dans la mesure où l'horodate 64 et le compteur 62 portés par le titre de transport 50 ne correspondraient alors plus à leurs copies stockées dans la mémoire du serveur 12.

Enfin, le procédé 100 peut être mis en oeuvre avec une grande indépendance vis-à-vis des opérateurs de téléphonie mobile, des fournisseurs de carte SIM et des fabricants de téléphones mobiles, de sorte que les opérateurs de transport public ne risquent pas de devenir dépendants de ces prestataires de service.

On notera que, dans le procédé 100 décrit ci-dessus, les étapes 230 et 140 de contrôle de la validité du titre de transport 50 par le valideur 17 et par le serveur central 12 comprennent chacune une sous-étape, respectivement 310, 420, de comparaison du premier identifiant 58 à un deuxième identifiant spécifique au terminal mobile 30. Dans une autre variante de l'invention (non représentée), le titre de transport 50 ne comprend pas le premier identifiant 58, et les sous-étapes 310, 420 sont omises ; la signature 54 du titre de transport 50 est alors calculée en utilisant un identifiant spécifique au terminal mobile 30 avec lequel le titre de transport 50 a été acheté, par exemple un identifiant réseau unique du terminal mobile 30, typiquement constitué par l'adresse MAC des premiers moyens de communication 32 dudit terminal mobile 30.

On notera également que, dans le procédé décrit ci-dessus, le titre de transport 50 est enregistré dans une mémoire 38 non sécurisée du terminal mobile 30. Dans une autre variante de l'invention (non représentée), le titre de transport 50 est enregistré dans une mémoire sécurisée du terminal mobile 30, par exemple la mémoire de la carte SIM 40 ou la mémoire d'une carte SD (de l'anglais « Secure Digital ») chiffrée, et la connexion sans fil établie entre le terminal mobile 30 et le valideur 17 lors de l'étape 215 est une connexion chiffrée.

On notera enfin que, bien que l'invention ait été décrite dans le cadre des contrôles d'accès aux réseaux de transport public, elle n'est pas limitée à ce seul domaine, et concerne de façon plus large tous les systèmes de contrôle d'accès à des zones réservées.

## Revendications

1. Procédé (100) de contrôle d'accès à une zone réservée par un système (10) de contrôle d'accès à la zone réservée, le procédé (100) comprenant les étapes suivantes :
- présentation (200) d'un terminal mobile (30) à un point de contrôle d'accès (14) du système de contrôle d'accès (10),
- capture (205) d'une image (24) portée par le point de contrôle d'accès (14), représentative d'une donnée informatique encodée, au moyen d'une caméra (36) du terminal mobile (30), et
- déchiffrement (210), par le terminal mobile (30), de l'image (24) capturée par la caméra (36), pour en déduire la donnée informatique encodée,
la donnée informatique encodée étant un identifiant unique du point de contrôle d'accès (14), et le procédé (100) comprenant en outre les étapes suivantes :
- établissement (215) d'une connexion sans fil (22) entre le terminal mobile (30) et le point de contrôle d'accès (14), par le terminal mobile (30), au moyen de l'identifiant unique du point de contrôle d'accès (14) déchiffrée,
- transmission (220) au point de contrôle d'accès (14), par le terminal mobile (30), d'un titre d'accès (50) à la zone réservée stocké dans sa mémoire (38), via la connexion sans fil (22), le titre d'accès (50) comprenant une horodate limite de validité (60) et un contrat de transport (66),
- premier contrôle (230) de la validité des données dudit titre d'accès (50) par le point de contrôle d'accès (14), ledit contrôle (230) comprenant les sous-étapes suivantes :
∘ lecture (315) de l'horodate limite de validité (60) du titre d'accès (50), et
∘ comparaison (320) de ladite horodate limite (60) avec la date-heure de l'instant de présentation du terminal mobile (30) au point de contrôle d'accès (14),
- deuxième contrôle (140, 330) de la validité des données du titre d'accès (50), et
- dans le cas où il est conclu à la validité desdites données du titre d'accès (50) dans le cadre du deuxième contrôle (140, 330), remplacement (150, 335) de l'horodate limite de validité (60) du titre d'accès (50) par une date-heure limite ultérieure.

2. Procédé de contrôle d'accès (100) selon la revendication 1, comprenant une étape supplémentaire de mise à jour (270) du titre d'accès (50) par le point de contrôle d'accès (14), dans la mémoire (38) du terminal mobile (30), via la connexion sans fil (22).

3. Procédé de contrôle d'accès (100) selon la revendication 2, dans lequel l'étape de mise à jour (270) comprend une sous-étape (271) d'horodatage du titre d'accès (50).

4. Procédé de contrôle d'accès (100) selon la revendication 2 ou 3, dans lequel l'étape de mise à jour (270) comprend une sous-étape (272) d'incrémentation d'un premier compteur (62) compris dans le titre d'accès (50), le procédé (100) comprenant en outre une étape (280) d'enregistrement d'une copie dudit compteur (62) dans un serveur central (12) du système de contrôle d'accès (10).

5. Procédé de contrôle d'accès (100) selon la revendication 4, dans lequel le deuxième contrôle (140, 330) de la validité des données du titre d'accès (50) comprend une sous-étape (333, 430) de contrôle de la conformité de la valeur du compteur (62) avant incrémentation à celle de la copie du compteur enregistrée sur le serveur central (12), les données du titre d'accès (50) n'étant déclarées valides que dans le cas où une telle conformité est vérifiée.

6. Procédé de contrôle d'accès (100) selon l'une quelconque des revendications précédentes, comprenant une étape (130) de connexion du terminal mobile (30) au serveur central (12) via Internet, le deuxième contrôle (140) de la validité des données du titre d'accès (50) étant effectué par le serveur central (12).

7. Procédé de contrôle d'accès (100) selon la revendication 6, dans lequel le deuxième contrôle (140) de la validité des données du titre d'accès (50) comprend une sous-étape (400) de vérification de l'intégrité des données du titre d'accès (50), le titre d'accès (50) n'étant déclaré valide que dans le cas où l'intégrité dudit titre d'accès (50) est vérifiée.

8. Procédé de contrôle d'accès (100) selon la revendication 6 ou 7, dans lequel le deuxième contrôle (140) de la validité des données du titre d'accès (50) comprend une sous-étape (420) de comparaison entre un premier identifiant unique (58) compris dans le titre d'accès (50) et un deuxième identifiant spécifique au terminal mobile (30), par exemple un identifiant réseau unique du terminal mobile, en particulier une adresse MAC du terminal mobile (30), le titre d'accès (50) n'étant déclaré valide qu'en cas d'adéquation entre les premier et deuxième identifiants.

9. Procédé de contrôle d'accès (100) selon l'une quelconque des revendications précédentes , dans lequel, dans le cas où l'horodate limite (60) est antérieure à la date-heure de l'instant de présentation du terminal mobile (30) au point de contrôle d'accès (14), le titre d'accès (50) est déclaré invalide.

10. Procédé de contrôle d'accès (100) selon l'une quelconque des revendications 1 à 8, dans lequel, dans le cas où l'horodate limite (60) est antérieure à la date-heure de l'instant de présentation du terminal mobile (30) au point de contrôle d'accès (14), le point de contrôle d'accès (14) effectue le deuxième contrôle (330) de la validité des données du titre d'accès (50).

11. Procédé de contrôle d'accès (100) selon l'une quelconque des revendications précédentes, dans lequel le premier contrôle (230) de la validité des données du titre d'accès (50) comprend une sous-étape (300) de vérification de l'intégrité des données du titre d'accès (50), le titre d'accès (50) n'étant déclaré valide que dans le cas où l'intégrité dudit titre d'accès (50) est vérifiée.

12. Procédé de contrôle d'accès (100) selon l'une quelconque des revendications précédentes, dans lequel le premier contrôle (230) de la validité des données du titre d'accès (50) comprend une sous-étape (310) de comparaison entre un premier identifiant unique (58) compris dans le titre d'accès (50) et un deuxième identifiant spécifique au terminal mobile (30), par exemple un identifiant réseau unique du terminal mobile, en particulier une adresse MAC du terminal mobile, le titre d'accès (50) n'étant déclaré valide qu'en cas d'adéquation entre les premier et deuxième identifiants.

13. Procédé de contrôle d'accès (100) selon la revendication 7 ou 11, dans lequel le titre d'accès (50) comprend une signature numérique (54) pour la vérification de son intégrité, ladite signature (54) étant fonction d'un identifiant spécifique au terminal mobile, par exemple un identifiant réseau unique du terminal mobile, en particulier une adresse MAC du terminal mobile.

## Patentansprüche

1. Verfahren (100) zum Kontrollieren des Zugangs zu einem reservierten Bereich durch ein System (10) zum Kontrollieren des Zugangs auf den reservierten Bereich, wobei das Verfahren (100) die folgenden Schritte aufweist:
- Präsentation (200) eines mobilen Endgeräts (30) an einem Zugangskontrollpunkt (14) des Systems zum Kontrollieren des Zugangs (10),
- Aufnahme (205) eines Bildes (24), getragen am Zugriffskontrollpunkt (14), repräsentativ für ein kodiertes Computerdatenelement, mittels einer Kamera (36) des mobilen Endgeräts (30), und
- Entschlüsselung (210), durch das mobile Endgerät (30), des durch die Kamera (36) aufgenommenen Bildes (24), um daraus das kodierte Computerdatenelement abzuleiten,
wobei das kodierte Computerdatenelement ein eindeutiger Identifikator des Zugangskontrollpunkts (14) ist und das Verfahren (100) außerdem die folgenden Schritte aufweist:
- Aufbau (215) einer drahtlosen Verbindung (22) zwischen dem mobilen Endgerät (30) und dem Zugangskontrollpunkt (14) durch das mobile Endgerät (30) mittels des entschlüsselten eindeutigen Identifikators des Zugangskontrollpunkts (14)
- Übertragung (220), durch das mobile Endgerät (30), einer in seinem Speicher gespeicherten Zugangsberechtigung (50) an den Zugangskontrollpunkt (14) über die drahtlose Verbindung (22), wobei die Zugangsberechtigung (50) eine Gültigkeitsbegrenzungszeit (60) und einen Transportvertrag (66) aufweist,
- erste Kontrolle (230) der Gültigkeit der Daten der Zugangsberechtigung (50) durch den Zugangskontrollpunkt (14), wobei die Kontrolle (230) die folgenden Unterschritte aufweist
∘ Lesen (315) der Gültigkeitsbegrenzungszeit (60) der Zugangsberechtigung (50) und
∘ Vergleich (320) der Begrenzungszeit (60) mit der Zeit des Moments des Präsentierens des mobilen Endgeräts (30) am Zugangskontrollpunkt (14),
- zweite Kontrolle (140, 330) der Gültigkeit der Daten der Zugangsberechtigung (50) und
- in dem Fall, in dem auf die Gültigkeit der Daten der Zugangsberechtigung (50) im Rahmen der zweiten Kontrolle (140, 330) geschlossen wird, Ersetzen (150, 335) der Gültigkeitsbegrenzungszeit (60) der Zugangsberechtigung (50) durch eine spätere Begrenzungszeit.

2. Verfahren zum Kontrollieren des Zugangs (100) gemäß Anspruch 1, aufweisend einen zusätzlichen Schritt der Aktualisierung (270) der Zugangsberechtigung (50) durch den Zugangskontrollpunkt (14) in dem Speicher (38) des mobilen Endgeräts (30) über die drahtlose Verbindung (22).

3. Verfahren zum Kontrollieren des Zugangs (100) gemäß Anspruch 2, in dem der Schritt der Aktualisierung (270) einen Unterschritt (271) des Versehens der Zugangsberechtigung (50) mit einem Zeitstempel aufweist.

4. Verfahren zum Kontrollieren des Zugangs (100) gemäß Anspruch 2 oder 3, in dem der Schritt der Aktualisierung (270) einen Unterschritt (272) des Inkrementierens eines ersten Zählers (62), der in der Zugangsberechtigung (50) enthalten ist, aufweist, wobei das Verfahren (100) außerdem einen Schritt (280) des Speicherns einer Kopie des Zählers (62) in einem zentralen Server (12) des Systems zum Kontrollieren des Zugangs (10) aufweist.

5. Verfahren zum Kontrollieren des Zugangs (100) gemäß Anspruch 4, in dem die zweite Kontrolle (140, 330) der Gültigkeit der Daten der Zugangsberechtigung (50) einen Unterschritt (333, 430) der Kontrolle der Übereinstimmung des Werts des Zählers (62) vor der Inkrementierung mit dem der auf dem zentralen Server (12) gespeicherten Kopie des Zählers aufweist, wobei die Daten der Zugangsberechtigung (50) nur in dem Fall als gültig erklärt werden, in dem eine solche Übereinstimmung verifiziert wird.

6. Verfahren zum Kontrollieren des Zugangs (100) gemäß einem der vorhergehenden Ansprüche, aufweisend einen Schritt (130) der Verbindung des mobilen Endgeräts (30) mit dem zentralen Server (12) über das Internet, wobei die zweite Kontrolle (140) der Gültigkeit der Daten der Zugangsberechtigung (50) durch den zentralen Server (12) durchgeführt wird.

7. Verfahren zum Kontrollieren des Zugangs (100) gemäß Anspruch 6, in dem die zweite Kontrolle (140) der Gültigkeit der Daten der Zugangsberechtigung (50) einen Unterschritt (400) der Verifikation der Integrität der Daten der Zugangsberechtigung (50) aufweist, wobei die Zugangsberechtigung (50) nur in dem Fall als gültig erklärt wird, in dem die Integrität der Zugangsberechtigung (50) verifiziert wird.

8. Verfahren zum Kontrollieren des Zugangs (100) gemäß Anspruch 6 oder 7, in dem die zweite Kontrolle (140) der Gültigkeit der Daten der Zugangsberechtigung (50) einen Unterschritt (420) des Vergleichs zwischen einem ersten in der Zugangsberechtigung (50) enthaltenen eindeutigen Identifikator (58) und einem zweiten Identifikator, der für das mobile Endgerät (30) spezifisch ist, zum Beispiel einen eindeutigen Netzidentifikator des mobilen Endgeräts, insbesondere eine MAC-Adresse des mobilen Endgeräts (30), aufweist, wobei die Zugangsberechtigung (50) nur im Fall einer Entsprechung zwischen dem ersten und zweiten Identifikator als gültig erklärt wird.

9. Verfahren zum Kontrollieren des Zugangs (100) gemäß einem der vorhergehenden Ansprüche, in dem, in dem Fall, dass die Begrenzungszeit (60) vor der Zeit des Moments der Präsentation des mobilen Endgeräts (30) am Zugangskontrollpunkt (14) liegt, die Zugangsberechtigung (50) als ungültig erklärt wird.

10. Verfahren zum Kontrollieren des Zugangs (100) gemäß einem der Ansprüche 1 bis 8, in dem, in dem Fall, dass die Begrenzungszeit (60) vor der Zeit des Moments der Präsentation des mobilen Endgeräts (30) am Zugangskontrollpunkt (14) liegt, der Zugangskontrollpunkt (14) die zweite Kontrolle (330) der Gültigkeit der Daten der Zugangsberechtigung (50) durchführt.

11. Verfahren zum Kontrollieren des Zugangs (100) gemäß einem der vorhergehenden Ansprüche, in dem die erste Kontrolle (230) der Gültigkeit der Daten der Zugangsberechtigung (50) einen Unterschritt (300) der Verifikation der Integrität der Daten der Zugangsberechtigung (50) aufweist, wobei die Zugangsberechtigung (50) nur in dem Fall als gültig erklärt wird, in dem die Integrität der Zugangsberechtigung (50) verifiziert wird.

12. Verfahren zum Kontrollieren des Zugangs (100) gemäß einem der vorhergehenden Ansprüche, in dem die erste Kontrolle (230) der Gültigkeit der Daten der Zugangsberechtigung (50) einen Unterschritt (310) des Vergleichs zwischen einem ersten in der Zugangsberechtigung (50) enthaltenen eindeutigen Identifikator (58) und einem zweiten Identifikator, der für das mobile Endgerät (30) spezifisch ist, zum Beispiel einen eindeutigen Netzidentifikator des mobilen Endgeräts, insbesondere eine MAC-Adresse des mobilen Endgeräts (30), aufweist, wobei die Zugangsberechtigung (50) nur im Fall einer Entsprechung zwischen dem ersten und zweiten Identifikator als gültig erklärt wird.

13. Verfahren zum Kontrollieren des Zugangs (100) gemäß Anspruch 7 oder 11, in dem die Zugangsberechtigung (50) eine digitale Signatur (54) für die Verifikation seiner Integrität aufweist, wobei die Signatur (54) von einem Identifikator, der für das mobile Endgerät spezifisch ist, zum Beispiel einem eindeutigen Netzidentifikator des mobilen Endgeräts, insbesondere einer MAC-Adresse des mobilen Endgeräts (30), abhängt.

## Claims

1. A method (100) of controlling access to a reserve zone via a system (10) for controlling access to the reserve zone, the method (100) comprising the following steps:
- presenting (200) a mobile terminal (30) to an access control point (14) of the access control system (10),
- capturing (205) an image (24) carried by the access control point (14), representative of an encoded item of computer data, using a camera (36) of the mobile terminal (30), and
- decrypting (210), via the mobile terminal (30), the image (24) captured by the camera (36), to deduce the encoded computer data therefrom,
the encoded item of computer data being a unique identifier of the access control point (14), and the method (100) further comprising the following steps:
- establishing (215) a wireless connection (22) between the mobile terminal (30) and the access control point (14), by the mobile terminal (30), using the unique identifier of the decrypted access control point (14),
- sending (220) to the access control point (14), via the mobile terminal (30), an access entitlement (50) to the reserve zone stored in its memory (38), via a wireless connection (22), the access entitlement (50) comprising an expiration timestamp (60) and a transportation contract (66),
- first check (230) of the validity of the data of said access entitlement (50) by the access control point (14), said check (230) comprising the following substeps:
∘ reading (315) the expiration timestamp (60) of the access entitlement (50), and
∘ comparing (320) said expiration timestamp (60) with the date-time of the presentation moment of the mobile terminal (30) to the access control point (14),
- second check (140, 330) of the validity of the data of the access entitlement (50), and
- if it is concluded that said data of the access entitlement (50) is valid as part of the second check (140, 330), replacing (150, 335) the expiration timestamp (60) of the access entitlement (50) with a later expiration date-time.

2. The access control method (100) according to claim 1, comprising an additional step for updating (270) the access entitlement (50) via the access control point (14), in the memory (38) of the mobile terminal (30), via a wireless connection (22).

3. The access control method (100) according to claim 2, wherein the update step (270) comprises a sub-step (271) for time stamping the access entitlement (50).

4. The access control method (100) according to claim 2 or 3, wherein the update step (270) comprises a sub-step (272) for incrementing a first counter (62) comprised in the access entitlement (50), the method (100) further comprising a step (280) for storing a copy of said counter (62) in a central server (12) of the access control system (10).

5. The access control method (100) according to claim 4, wherein the second check (140, 330) of the validity of the data of the access entitlement (50) comprises a sub-step (333, 430) for checking the compliance of the value of the counter (62) before incrementation with that of the copy of the counter saved on the central server (12), the data of the access entitlement (50) only being declared valid if such compliance is verified.

6. The access control method (100) according to any one of the preceding claims, comprising a step (130) for connecting the mobile terminal (30) to the central server (12) via the Internet, the second check (140) of the validity of the data of the access entitlement (50) being done by the central server (12).

7. The access control method (100) according to claim 6, wherein the second check (140) of the validity of the data of the access entitlement (50) comprises a sub-step (400) for verifying the integrity of the data of the access entitlement (50), the access entitlement (50) only being declared invalid if the integrity of said access entitlement (50) is verified.

8. The access control method (100) according to claim 6 or 7, wherein the second check (140) of the validity of the data of the access entitlement (50) comprises a sub-step (420) for performing a comparison between a first unique identifier (58) comprised in the access entitlement (50) and a second identifier specific to the mobile terminal (30), for example a unique network identifier of the mobile terminal, in particular a MAC address of the mobile terminal (30), the access entitlement (50) only being declared valid if the first and second identifiers match.

9. The access control method (100) according to any one of the preceding claims, wherein, if the expiration timestamp (60) is before the date-time of the presentation moment of the mobile terminal (30) to the access control point (14), the access entitlement (50) is declared invalid.

10. The access control method (100) according to any one of claims 1 to 8, wherein, if the expiration timestamp (60) is before the date-time of the presentation moment of the mobile terminal (30) to the access control point (14), the access control point (14) performs the second check (330) of the validity of the data of the access entitlement (50).

11. The access control method (100) according to any one of the preceding claims, wherein the first check (230) of the validity of the data of the access entitlement (50) comprises a sub-step (300) for verifying the integrity of the data of the access entitlement (50), the access entitlement (50) only being declared invalid if the integrity of said access entitlement (50) is verified.

12. The access control method (100) according to any one of the preceding claims, wherein the first check (230) of the validity of the data of the access entitlement (50) comprises a sub-step (310) for performing a comparison between a first unique identifier (58) comprised in the access entitlement (50) and a second identifier specific to the mobile terminal (30), for example a unique network identifier of the mobile terminal, in particular a MAC address of the mobile terminal, the access entitlement (50) only being declared valid if the first and second identifiers match.

13. The access control method (100) according to claim 7 or 11, wherein the access entitlement (50) comprises a digital signature (54) to verify its integrity, said signature (54) depending on an identifier specific to the mobile terminal, for example a unique network identifier of the mobile terminal, in particular a MAC address of the mobile terminal.
